# EUROPÄISCHE PATENTANMELDUNG

(11) **EP 2 080 607 A1**
(43) Veröffentlichungstag der Anmeldung: **22.07.2009**
(21) Anmeldenummer: 08001000.2
(22) Anmeldetag: 19.01.2008
(51) Int. Cl.: B29C 53/06, B29C 59/00, B65D 75/32

(54) **Verfahren und Vorrichtung zur Herstellung einer Biegekante bei Blisterpackungen**

(71) Anmelder: Koch Pac-Systeme GmbH, 72285 Pfalzgrafenweiler (DE)
(72) Erfinder: Stoll, Rainer, 72285 Pfalzgrafenweiler (DE)
(74) Vertreter: Hentrich, Swen

(57) **Zusammenfassung**

Bei einem Verfahren zur Herstellung einer Biegekante bei einer Blisterpackung (1) wird die Blisterpackung (1) auf eine Unterlage (2) mit mindestens einer hervorstehenden Kante (3) gebracht, so dass die Blisterpackung (1) in einem Bereich der herzustellenden Biegekante auf der hervorstehenden Kante (3) mit einer ersten Oberflächenseite der Blisterpackung (1) aufliegt. Weiterhin werden eine Sonotrode (4) und / oder die Blisterpackung (1) zueinander so bewegt, dass auf den Bereich der herzustellenden Biegekante der Blisterpackung (1) ein vorbestimmter Arbeitsdruck ausgeübt wird. Anschließend wird Sonotrode (4) aktiviert, um die Biegekante auszubilden.

## Beschreibung

Die vorliegende Erfindung betrifft ein Verfahren und eine Vorrichtung zur Herstellung einer Biegekante bei Blisterpackungen sowie die entsprechenden Blisterpackungen.

Bei Blisterpackungen mit einer Biegekante, sogenannten Klappblistern, bei denen das Unterteil und das Oberteil aus einem Stück und über eine Biegekante verbunden hergestellt sind, ist die Biegekante ein wesentliches Teil der Blisterpackung. Das Herstellungsverfahren der Biegekante trägt entscheidend zum optischen Eindruck der Blisterpackungen mit Biegekante und zur Funktionsweise der Biegekante bei.

Die Blisterpackungen mit Biegekante werden in der Verpackungstechnik häufig dort eingesetzt, wo die Funktion eines Etuis bzw. einer wiederverschließbaren Schatulle benötigt wird, wodurch einzelne Produkte aus den Blisterpackungen mit Biegekante entnommen werden können, während die noch nicht benötigten Produkte in den Blisterpackungen mit Biegekante verbleiben.

Da die Blisterpackungen mit Biegekante häufig auch als eine Verkaufseinheit ohne eine weitere Umverpackung dienen, sind sowohl der optische als auch der funktionelle Eindruck der Blisterpackungen mit Biegekante von entscheidender Bedeutung. Herkömmliche Blisterpackungen mit Biegekante sind meistens mit einem thermisch geformten Scharnier versehen, das im Querschnitt die Form eines "U" oder eines "UU" oder eines "W" aufweist. Diese herkömmlichen Blisterpackungen mit Biegekante weisen den Nachteil auf, dass im geschlossen Zustand sehr viel Platz benötigt wird. Ein weiterer Nachteil liegt darin, dass sie beim Benutzer einen unvorteilhaften optischen Eindruck hervorrufen, so dass auch unter diesen Gesichtspunkt Bedarf für eine alternative Lösung besteht.

Andere herkömmliche Blisterpackungen mit Biegekante weisen eine Biegekante auf, die mit einem Schneidewerkzeug in die Folie der Blisterpackungen eingeschnitten oder eingestanzt wurde. Die Dicke der Folienschicht wird dabei in Abhängigkeit von der Folientemperatur durch Verdrängen oder durch Anritzen stark verringert. Die sich daraus ergebende Biegekante nimmt wenig Platz in Anspruch und ruft einen optisch vorteilhaften Eindruck bei den Benutzern hervor. Allerdings weisen diese herkömmlichen Blisterpackungen mit Biegekante den Nachteil auf, dass zum Einen die Biegekanten starke Rückstellkräfte aufweisen und zum Anderen nach wenigen Öffnungs- und Schließvorgängen die Biegekanten brechen. Diese Nachteile treten auch auf, wenn das Scharnier mittels einer Perforation hergestellt wird, bei der nur noch kleine Stege oder einzelne Punkte die Verbindung zwischen dem Oberteil und dem Unterteil der Blisterpackung darstellen.

Weitere herkömmliche Blisterpackungen mit Biegekante weisen eine Biegekante auf, die durch Verwendung von Hochfrequenzverfahren hergestellt wurden. Dabei werden durch elektromagnetische Schwingungen die Kunststoffmoleküle zum Schwingen angeregt und auf diese Weise die Folie der Blisterpackung von innen heraus aufgeheizt, während mechanisch mit einem Werkzeug die Biegekante eingebracht wird. Dieses Verfahren weist den Nachteil auf, dass es aufwendig und kostenintensiv ist, so dass es nur für komplexere Produkte verwendet wird, bei denen mehrere, nichtparallele Biegekanten gleichzeitig hergestellt werden sollen.

Die Aufgabe der vorliegenden Erfindung liegt darin, ein Verfahren zur Herstellung einer Biegekante bei Blisterpackungen und eine Vorrichtung zur Herstellung einer Biegekante bei Blisterpackung sowie eine Blisterpackung mit Biegekante bereit zu stellen, die die oben genannten Nachteile der herkömmlichen Verfahren zur Herstellung einer Biegekante bei Blisterpackungen und der herkömmlichen Vorrichtungen zur Herstellung einer Biegekante bei Blisterpackungen sowie die Nachteile der herkömmlichen Blisterpackungen mit Biegekante überwinden.

Ein erster Gesichtspunkt der vorliegenden Erfindung betrifft ein Verfahren zur Herstellung einer Biegekante bei einer Blisterpackung. Das Verfahren umfasst einen Verfahrensschritt des Aufbringens der Blisterpackung auf eine Unterlage mit mindestens einer hervorstehenden Kante, so dass die Blisterpackung in einem Bereich der herzustellenden Biegekante auf der hervorstehenden Kante mit einer ersten Oberflächenseite der Blisterpackung aufliegt, einen Verfahrensschritt einer Relativbewegung einer Sonotrode in dem Bereich der herzustellenden Biegekante an eine zweite Oberflächenseite der Blisterpackung, wobei die zweite Oberflächenseite der ersten Oberflächenseite gegenüber liegt, so dass auf den Bereich der herzustellenden Biegekante der Blisterpackung ein vorbestimmter Arbeitsdruck ausgeübt wird, und einen Verfahrensschritt des Aktivierens der Sonotrode. Somit wird eine belastbare und optisch ansprechende Biegekante bei der Blisterpackung hergestellt.

Weiterhin kann bei dem Verfahren der Verfahrensschritt der Relativbewegung einen Verfahrensschritt des Bewegens der Sonotrode in Richtung der Blisterpackung auf der Unterlage umfassen. Alternativ oder zusätzlich kann bei dem Verfahren der Verfahrensschritt der Relativbewegung einen Verfahrensschritt des Bewegens der Blisterpackung auf der Unterlage in Richtung der Sonotrode umfassen. Diese Ausgestaltungen sind verschiedene Möglichkeiten in Abhängigkeit von den Anforderungen den Arbeitsdruck in dem Bereich der herzustellenden Biegekante bereit zu stellen.

Es hat sich bei dem Verfahren als vorteilhaft erwiesen, dass der Arbeitsdruck in dem Bereich der herzustellenden Biegekante 20 kPa bis 60 kPa und insbesondere 50 kPa beträgt. Weiterhin hat es sich bei dem Verfahren als vorteilhaft erwiesen, dass eine zur Herstellung des Arbeitsdruckes angelegte maximale Kraft in dem Bereich von 2000 N bis 4000 N und insbesondere bei 2800 N liegt. Auf diese Weise wird die Biegekante in die Blisterpackung eingebracht, ohne dass die Materialeigenschaften der Folie der Blisterpackung durch eine Materialermüdung oder eine Materialüberanspruchung verschlechtert werden.

Außerdem hat es sich bei dem Verfahren als vorteilhaft erwiesen, dass eine Amplitude der Sonotrode in dem Bereich von 40 % bis 70 % und insbesondere 60 % des maximalen Ausschlages verwendet wird. Auf diese Weise wird die Sonotrode in einem Arbeitsbereich betrieben, der eine bessere Steuerung als der maximale Ausschlag ermöglicht.

Bei einem vorteilhaften Ausführungsbeispiel des Verfahrens liegt eine Eindringtiefe der hervorstehenden Kante in die Blisterpackung in dem Bereich von 0,05 mm bis 0,20 mm vor. Dadurch wird bei den verwendeten Folienstärken der Blisterpackungen sowohl die Funktion der Biegekante als auch die Haltbarkeit der Biegekante gesichert.

Als besonders günstig hat es sich erwiesen, wenn bei dem Verfahren die Zeitdauer, während der der vorbestimmte Arbeitsdruck auf die Blisterpackung ausgeübt wird, in dem Bereich von 0,05 s bis 0,1 s und insbesondere in dem Bereich von 0,067 s bis 0,073 s liegt.

Die verwendete Sonotrode kann Aluminium oder Titan enthalten. Dieses Sonotrodenmaterial hat sich für die verwendeten Kunststoffe als besonders vorteilhaft erwiesen.

Bei einem bevorzugten Ausführungsbeispiel des Verfahrens werden longitudinale Schwingungen der Sonotrode zur Herstellung der Biegekante verwendet. Weiterhin kann bei dem Verfahren für die Sonotrode eine Frequenz in dem Bereich von 10 kHz bis 50 kHz und insbesondere 20 kHz verwendet werden. Auf diese Weise kann die Energie besonders gut gezielt und gesteuert in die Folie der Blisterpackung zur Herstellung der Biegekante eingebracht werden.

Bei dem Verfahren ist es besonders günstig, wenn die verwendete Blisterpackung einen thermoplastischen Kunststoff und insbesondere ein Polyethylenterephthalat oder ein Polyvinylclorid aufweist, weil diese Materialien eine gute Formbarkeit bei gleichzeitiger Stabilität aufweisen.

Ein zweiter Gesichtspunkt der vorliegenden Erfindung betrifft eine Vorrichtung zur Herstellung einer Biegekante bei einer Blisterpackung. Die Vorrichtung enthält eine Unterlage mit mindestens einer hervorstehenden Kante zur Aufnahme einer Blisterpackung und eine Sonotrode, wobei die Sonotrode und die Unterlage derart angeordnet sind, dass eine Bewegung der Sonotrode an die hervorstehende Kante und / oder eine Bewegung der hervorstehenden Kante an die Sonotrode durchführbar ist. Die Unterlage dient dabei als ein Amboss. Somit kann eine Blisterpackung mit einer belastbaren und optisch ansprechenden Biegekante hergestellt werden.

Besonders günstig ist es, wenn bei der Vorrichtung die hervorstehende Kante auf einem aus der Unterlage herausnehmbaren Einsatz angeordnet ist. Dies hat den Vorteil, dass die Ausgestaltung der hervorstehenden Kante bei der Vorrichtung für verschiedene Blisterpackungen und Anforderungen jeweils auf einfache Weise angepasst werden kann.

Bei einem vorteilhaften Ausführungsbeispiel der Vorrichtung steht die hervorstehende Kante in einem Bereich von 0,05 mm bis 0,20 mm über der Unterlage hervor. Auf diese Weise wird bei den verwendeten Folienstärken der Blisterpackungen sowohl die Funktion der Biegekante als auch die Haltbarkeit der Biegekante gesichert.

Als vorteilhaft hat sich bei der Vorrichtung erwiesen, dass die Unterlage und /oder die hervorstehende Kante einen Stahl aufweist. Weiterhin hat sich als günstig erwiesen, dass die Sonotrode Aluminium oder Titan aufweist. Diese Materialien sind bei den verwendeten Kunststoffen der Blisterpackungen für die Herstellung der Biegekante besonders geeignet.

Des Weiteren kann bei der Vorrichtung die Unterlage eine Aussparung zur Aufnahme von hervorstehenden Bereichen der Blisterpackung aufweisen. Dadurch wird eine besonders sichere Aufnahme der Blisterpackung während der Herstellung der Biegekante ermöglicht.

Als günstig hat sich bei der Vorrichtung erwiesen, dass die hervorstehende Kante abgerundet ist. Auf diese Weise wird das Material der Folie geschont, so dass die Biegekante eine größere Stabilität aufweist. Als besonders vorteilhaft hat sich erwiesen, wenn die hervorstehende Kante einen Krümmungsradius in dem Bereich von 1 mm bis 5 mm, insbesondere 2 mm aufweist.

Ein dritter Gesichtspunkt der vorliegenden Erfindung betrifft eine Blisterpackung, die nach einem der oben genannten Verfahren hergestellt wurde und die eine Biegekannte mit mindestens einer entlang der Biegekante angeordneten Vertiefung mit einer Tiefe in dem Bereich von 0,05 mm bis 0,20 mm aufweist. Auf diese Weise wird eine hohe Stabilität der Biegekante bei gleichzeitig geringen Ausmaßen der Biegekante erreicht.

Bei einem vorteilhaften Ausführungsbeispiel der Blisterpackung weist die Blisterpackung einen thermoplastischen Kunststoff, insbesondere ein Polyethylenterephthalat oder ein Polyvinylclorid auf. Diese Materialien ermöglichen eine hohe Stabilität der Biegekante.

Im Folgenden wird die Erfindung an einem in der Zeichnung dargestellten Ausführungsbeispiel näher erläutert; es zeigen:
- Fig. 1: eine schematische Querschnittsdarstellung einer erfindungsgemäßen Vorrichtung zur Herstellung einer Biegekante bei einer Blisterpackung im geöffneten Zustand mit einer Blisterpackung,
- Fig. 2: eine schematische Querschnittsdarstellung der erfindungsgemäßen Vorrichtung der Fig. 1 im geschlossenen Zustand mit der Blisterpackung,
- Fig. 3: eine vergrößerte Darstellung des Bereiches in der Vorrichtung mit der Blisterpackung aus der Fig. 2, bei dem die Biegekante hergestellt wird, und
- Fig. 4: eine schematische Draufsicht auf die erfindungsgemäße Blisterpackung nach der Herstellung der Biegekante in der Unterlage.

Nachfolgend wird ein Ausführungsbeispiel der vorliegenden Erfindung erklärt.

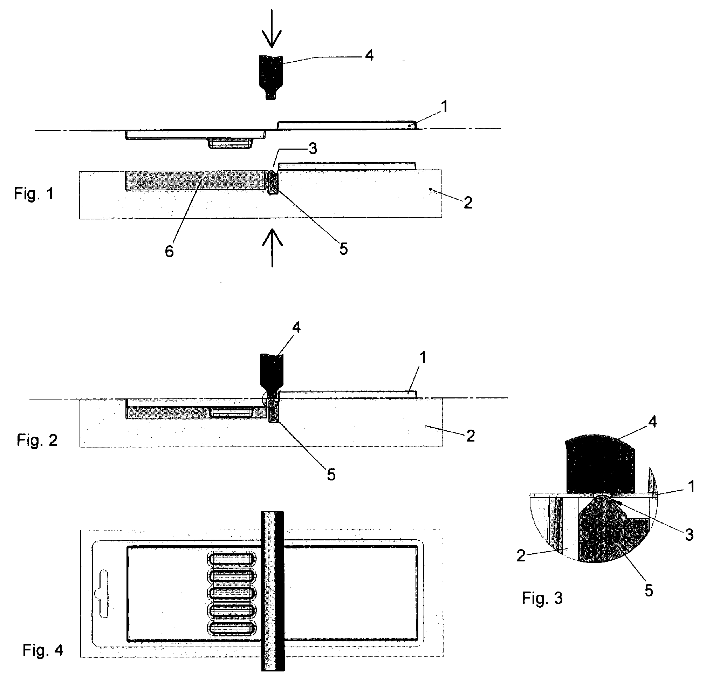

Die Fig. 1 zeigt eine schematische Darstellung der Vorrichtung zur Herstellung einer Biegekante bei einer Blisterpackung 1 nach der vorliegenden Erfindung im geöffneten Zustand. Die Vorrichtung weist eine Unterlage 2 mit mindestens einer hervorstehenden Kante 3 zur Aufnahme der Blisterpackung 1 und eine Sonotrode 4 auf. Die Sonotrode 4 und die Unterlage 2 sind derart angeordnet, dass eine Bewegung der Sonotrode 4 an die hervorstehende Kante 3 und / oder eine Bewegung der hervorstehenden Kante 3 an die Sonotrode 4 durchführbar ist, wobei die Bewegungen in der Fig. 1 durch die Pfeile angedeutet sind. Die Unterlage 2 kann eine Aussparung 6 zur Aufnahme von hervorstehenden Bereichen der Blisterpackung 1 aufweisen, wodurch eine sichere Aufnahme der Blisterpackung 1 in die Unterlage 2 gewährleistet wird, wobei die Unterlage 2 als ein Zentrieramboss dient.

Aus der Fig. 1 ist ersichtlich, dass die hervorstehende Kante 3 auf einem aus der Unterlage 2 herausnehmbaren Einsatz 5 angeordnet sein kann, wodurch in Abhängigkeit von den Blisterpackungen und den eingesetzten Materialien eine schnelle und kostengünstige Anpassung der hervorstehenden Kante 3 an die verschiedenen Anforderungen durchgeführt werden kann.

Was die verwendeten Materialien bei der Vorrichtung betrifft, so können die Unterlage 2 und die hervorstehende Kante 3 einen Stahl enthalten und kann die Sonotrode 4 Aluminium oder Titan enthalten.

Die Fig. 2 zeigt eine schematische Darstellung der Vorrichtung zur Herstellung einer Biegekante bei einer Blisterpackung 1 der Fig. 1 im geschlossen Zustand, nachdem die Sonotrode 4 und / oder die Unterlage 2 in Pfeilrichtung so bewegt worden sind, dass in dem Bereich, in dem die Biegekante hergestellt werden soll, ein vorbestimmter Arbeitsdruck ausgeübt wird. Die Blisterpackung 1 liegt auf der Unterlage 2 auf, wobei die Unterlage 2 als ein Zentrieramboss dient. Der Arbeitsdruck für den Bereich der herzustellenden Biegekante liegt im Bereich von 20 kPa bis 60 kPa und insbesondere bei 50 kPa. Dabei wird zur Herstellung des Arbeitsdruckes maximal eine Kraft in dem Bereich von 2000 N bis 4000 N und insbesondere von 2800 N angelegt. Weiterhin wird für die Sonotrode 4 eine Amplitude in dem Bereich von 40 % bis 70 % und insbesondere von 60 % des maximalen Ausschlages verwendet. Die Zeitdauer, während der der vorbestimmte Arbeitsdruck auf die Blisterpackung 1 zur Herstellung der Biegekante ausgeübt wird, liegt in dem Bereich von 0,05 s bis 0,1 s und insbesondere in dem Bereich von 0,067 s bis 0,073 s. Bevorzugt werden longitudinale Schwingungen der Sonotrode 4 zur Herstellung der Biegekante verwendet. Die Frequenz für die Sonotrode 4 liegt in dem Bereich von 10 kHz bis 50 kHz und insbesondere bei 20 kHz.

Die Fig. 3 zeigt eine vergrößerte Darstellung des Bereiches in der Vorrichtung mit der Blisterpackung 1 aus der Fig. 2, bei dem die Biegekante hergestellt wird. Die hervorstehende Kante 3 kann abgerundet sein, wobei die hervorstehende Kante 3 einen Krümmungsradius in dem Bereich von 1 mm bis 5 mm und insbesondere von 2 mm aufweist. Die hervorstehende Kante 3 steht 0,05 mm bis 0,20 mm über der Unterlage 2 hervor, so dass die hervorstehenden Kante 3 in die Blisterpackung 1 in einem Bereich von 0,05 mm bis 0,20 mm eindringt. Durch die aktivierte Sonotrode 4 wird in diesem Bereich die Biegekante schnell und materialschonend gebildet.

Die Fig. 4 zeigt eine schematische Draufsicht auf die erfindungsgemäße Blisterpackung 1 in der Unterlage 2 nach der Herstellung der Biegekante. Die Biegekannte der Blisterpackung 1 weist mindestens eine entlang der Biegekante angeordnete Vertiefung mit einer Tiefe in dem Bereich von 0,05 mm bis 0,20 mm auf. Besonders vorteilhaft ist es, wenn die Blisterpackung 1 aus einem thermoplastischen Kunststoff und insbesondere aus einem Polyethylenterephthalat (PET) oder einem Polyvinylclorid (PVC) gebildet ist.

Das erfindungsgemäße Verfahren und die erfindungsgemäße Vorrichtung können sowohl für einzelne Blister als auch für sich noch in einer durchlaufenden Schicht befindliche Blister / Blistervorstufen bzw. in einem durchlaufenden Schichtenverbund befindliche Blister / Blistervorstufen verwendet werden.

Bei Kettenführungsmaschinen können sich die Schicht oder der Schichtenverbund in dem entsprechenden Bereich verjüngen, wobei die Zentrierung und Positionierung der Blister / Blistervorstufen nicht über die erfindungsgemäße Vorrichtung zu erfolgen braucht, sondern durch andere Bauteile bewirkt werden kann.

## Patentansprüche

1. Verfahren zur Herstellung einer Biegekante bei einer Blisterpackung (1), **gekennzeichnet durch** einen Verfahrensschritt des Aufbringens der Blisterpackung (1) auf eine Unterlage (2) mit mindestens einer hervorstehenden Kante (3), so dass die Blisterpackung (1) in einem Bereich der herzustellenden Biegekante auf der hervorstehenden Kante (3) mit einer ersten Oberflächenseite der Blisterpackung (1) aufliegt, einen Verfahrensschritt einer Relativbewegung einer Sonotrode (4) in dem Bereich der herzustellenden Biegekante an eine zweite Oberflächenseite der Blisterpackung (1), wobei die zweite Oberflächenseite der ersten Oberflächenseite gegenüber liegt, so dass auf den Bereich der herzustellenden Biegekante der Blisterpackung (1) ein vorbestimmter Arbeitsdruck ausgeübt wird, und einen Verfahrensschritt des Aktivierens der Sonotrode (4).

2. Verfahren nach Anspruch 1, **dadurch gekennzeichnet, dass** der Verfahrensschritt der Relativbewegung einen Verfahrensschritt des Bewegens der Sonotrode (4) in Richtung der Blisterpackung (1) auf der Unterlage (2) umfasst.

3. Verfahren nach Anspruch 1 oder 2, **dadurch gekennzeichnet, dass** der Verfahrensschritt der Relativbewegung einen Verfahrensschritt des Bewegens der Blisterpackung (1) auf der Unterlage (2) in Richtung der Sonotrode (4) umfasst.

4. Verfahren nach einem der Ansprüche 1 bis 3, **dadurch gekennzeichnet, dass** der Arbeitsdruck in dem Bereich der herzustellenden Biegekante 20 kPa bis 60 kPa, insbesondere 50 kPa beträgt.

5. Verfahren nach einem der Ansprüche 1 bis 4, **dadurch gekennzeichnet, dass** eine Amplitude der Sonotrode (4) in dem Bereich von 40 % bis 70 %, insbesondere 60 % des maximalen Ausschlages verwendet wird.

6. Verfahren nach einem der Ansprüche 1 bis 5, **dadurch gekennzeichnet, dass** eine zur Herstellung des Arbeitsdruckes angelegte maximale Kraft in dem Bereich von 2000 N bis 4000 N, insbesondere bei 2800 N liegt.

7. Verfahren nach einem der Ansprüche 1 bis 6, **dadurch gekennzeichnet, dass** eine Eindringtiefe der hervorstehenden Kante (3) in die Blisterpackung (1) in dem Bereich von 0,05 bis 0,20 mm vorliegt.

8. Verfahren nach einem der Ansprüche 1 bis 7, **dadurch gekennzeichnet, dass** eine Zeitdauer, während der der vorbestimmte Arbeitsdruck auf die Blisterpackung (1) ausgeübt wird, in dem Bereich von 0,05 s bis 0,1 s und insbesondere in dem Bereich von 0,067 s bis 0,073 s liegt.

9. Verfahren nach einem der Ansprüche 1 bis 8, **dadurch gekennzeichnet, dass** die verwendete Sonotrode (4) Aluminium oder Titan aufweist.

10. Verfahren nach einem der Ansprüche 1 bis 9, **dadurch gekennzeichnet, dass** longitudinale Schwingungen der Sonotrode (4) zur Herstellung der Biegekante verwendet werden.

11. Verfahren nach einem der Ansprüche 1 bis 10, **dadurch gekennzeichnet, dass** eine Frequenz für die Sonotrode (4) in dem Bereich von 10 kHz bis 50 kHz, insbesondere von 20 kHz verwendet wird.

12. Verfahren nach einem der Ansprüche 1 bis 11, **dadurch gekennzeichnet, dass** die verwendete Blisterpackung (1) einen thermoplastischen Kunststoff, insbesondere ein Polyethylenterephthalat oder ein Polyvinylclorid aufweist.

13. Vorrichtung zur Durchführung eines Verfahrens zur Herstellung einer Biegekante bei einer Blisterpackung (1) nach einem der Ansprüche 1 bis 12, **dadurch gekennzeichnet, dass** die Vorrichtung eine Unterlage (2) mit mindestens einer hervorstehenden Kante (3) zur Aufnahme einer Blisterpackung (1) und eine Sonotrode (4) aufweist, wobei die Sonotrode (4) und die Unterlage (2) derart angeordnet sind, dass eine Bewegung der Sonotrode (4) an die hervorstehende Kante (3) und / oder eine Bewegung der hervorstehenden Kante (3) an die Sonotrode (4) durchführbar ist.

14. Vorrichtung nach Anspruch 13, **dadurch gekennzeichnet, dass** die hervorstehende Kante (3) auf einem aus der Unterlage (2) herausnehmbaren Einsatz (5) angeordnet ist.

15. Vorrichtung nach Anspruch 13 oder 14, **dadurch gekennzeichnet, dass** die hervorstehende Kante (3) in einem Bereich von 0,05 mm bis 0,20 mm über der Unterlage (2) hervorsteht.

16. Vorrichtung nach einem der Ansprüche 13 bis 15, **dadurch gekennzeichnet, dass** die Unterlage (2) und / oder die hervorstehende Kante (3) einen Stahl aufweist.

17. Vorrichtung nach einem der Ansprüche 13 bis 16, **dadurch gekennzeichnet, dass** die Unterlage (2) eine Aussparung (6) zur Aufnahme von hervorstehenden Bereichen der Blisterpackung (1) aufweist.

18. Vorrichtung nach einem der Ansprüche 13 bis 17, **dadurch gekennzeichnet, dass** die hervorstehende Kante (3) abgerundet ist.

19. Vorrichtung nach Anspruch 18, **dadurch gekennzeichnet, dass** die hervorstehende Kante (3) einen Krümmungsradius in dem Bereich von 1 mm bis 5 mm, insbesondere 2 mm aufweist.

20. Vorrichtung nach einem der Ansprüche 13 bis 19, **dadurch gekennzeichnet, dass** die Sonotrode (4) Aluminium oder Titan aufweist.

21. Blisterpackung (1), **dadurch gekennzeichnet, dass** die Blisterpackung (1) nach einem Verfahren der Ansprüche 1 bis 12 hergestellt worden ist und dass eine Biegekannte der Blisterpackung (1) mindestens eine entlang der Biegekante angeordnete Vertiefung mit einer Tiefe in dem Bereich von 0,05 mm bis 0,20 mm aufweist.

22. Blisterpackung nach Anspruch 21, **dadurch gekennzeichnet, dass** die Blisterpackung (1) einen thermoplastischen Kunststoff, insbesondere ein Polyethylenterephthalat oder ein Polyvinylclorid aufweist.
